# EUROPÄISCHE PATENTSCHRIFT

(11) **EP 2 739 519 B1**
(45) Veröffentlichungstag und Bekanntmachung des Hinweises auf die Patenterteilung: **17.06.2015**
(21) Anmeldenummer: 12758743.4
(22) Anmeldetag: 03.08.2012
(51) Int. Cl.: B62D 1/20, F16D 3/38, F16D 1/08

(54) **LENKUNGSANORDNUNG**
STEERING ARRANGEMENT
DISPOSITIF DE DIRECTION

(30) Priorität: 06.08.2011 DE 102011109705
(43) Veröffentlichungstag der Anmeldung: 11.06.2014
(73) Patentinhaber: Daimler AG, 70327 Stuttgart (DE)
(72) Erfinder: HEBENSTREIT, Axel, 70569 Stuttgart (DE); LÖFFLER, Hans-Dieter, 72766 Reutlingen (DE); MEYER, Thorsten, 72218 Wildberg (DE)
(74) Vertreter: JENSEN & SON
(86) Internationale Anmeldenummer: PCT/EP2012/003318
(87) Internationale Veröffentlichungsnummer: WO 2013/020683

(56) Entgegenhaltungen:
- JP-A- H10 205 545

## Beschreibung

Die Erfindung betrifft eine Lenkungsanordnung gemäß dem Oberbegriff des Patentanspruches 1.

Die bislang durchgeführte Direktverschraubung der Lenkspindel unten mit der Lenkungskupplung ist im Packageumfeld aus Abgasanlage, Katalysatoren, Motor und Leitungen nur mit erheblichem Aufwand möglich. Dabei wird die Lenkspindel unten mit der Lenkungskupplung quer zur Lenkspindelrichtung verschraubt. Dies hat zum einen den Nachteil der schlechten Zugänglichkeit, zum anderen erhöht sich die Variantenanzahl bei Optimierung der Zugänglichkeit für unterschiedliche Motorvarianten und Lenkungslagen, etwa Links- und Rechtslenkermodelle, und zusätzlich können Standardmontagereihenfolgen, wie etwa der Zeitpunkt der Montage der Abgasanlage kaum oder gar nicht eingehalten werden. Vom Werker ist die Verschraubung aufgrund der schlechten Zugänglichkeit nur sehr umständlich zu erledigen und kostet sehr viel Montagezeit. Hierbei besteht die Gefahr, dass dem Werker die erforderliche Schraube entgleitet und herunterfällt, wonach diese aus Produktionssicherheitsgründen erst einmal gesucht und gefunden werden muss. Der Montageablauf wird in diesem Falle unterbrochen, was einen erheblichen Zeitaufwand bedeutet. Bei einem anderen Ansatz der Gestaltung der Vorrichtung wird auf das Lenkungskupplungsteil verzichtet und nur die Lenkspindel unten verwendet, wobei hier allerdings nachteilig ein Hochfahren des Motors in Z-Richtung während der Hochzeit und somit die Zusammenführung der vormontierten Motor-/Getriebe- und Fahrwerkseinheit nicht möglich ist.

So beschreibt die DE 10 2008 006 497 A1 eine Montageanordnung zum Verbinden einer Lenkspindel mit einer Lenkungskupplung. Das Endstück der Lenkspindel wird in einen endseitigen Aufnahmebereich der Lenkungskupplung eingeführt, wobei die Montageanordnung eine Vorrichtung umfasst, um im Wesentlichen das koaxiale Ausrichten der Lenkspindel und der Lenkungskupplung zu leisten. So wird das automatisierte Zusammenführen der Lenkspindel mit der Lenkungskupplung ermöglicht, da ein manuelles koaxiales Ausrichten der Lenkspindel und der Lenkungskupplung vermeidbar ist. Dazu weist die Lenkspindel dort ein endseitiges Hakenelement auf, in das eine Zugbandschlaufe, die aus dem endseitigen Aufnahmebereich der Lenkungskupplung herausragt, vor der Hochzeit eingehängt wird. Durch Ziehen an der Schlaufe des Zugbandes wird das Hakenelement zusammen mit dem Endstück der Lenkspindel in den endseitigen Aufnahmebereich der Lenkungskupplung eingeführt, um dort verschraubt zu werden.

Ferner ist aus der DE 102 39 202 B4 eine Verbindung zwischen einer Lenkwelle und einem Lenkgetriebe in einem Kraftfahrzeug mit einem teilbaren Gelenk bekannt, durch das Montage- und Demontageprozesse vereinfacht werden. Dazu weist das Gelenk einen mit Vorsprüngen ausgestatteten, zur Montage durch eine Öffnung im Fußraum des Kraftfahrzeuges hindurchführbaren Fortsatz auf, welcher in eine außerhalb des Fußraumes relativ zu dem Fortsatz bewegliche, in Richtung des Fußraumes erweiterte kelch- oder tulpenförmige Aufnahme drehfest einführbar ist. Das Gelenk ist als Tripodengelenk ausgeführt, wobei der Fortsatz einen Tripodenkopf mit drei radial sich von dem Fortsatz erstreckenden Segmenten aufweist, die in korrespondierende Nuten der Aufnahme eingreifen.

Weiterhin ist aus der JP 10 205545 A eine Lenkungsanordnung mit einer Klemmkupplung entnehmbar, bei der ein wellenförmiger, endseitig verzahnter Spindelabschnitt mit einem Gabelkopf, der einen innenverzahnten Aufnahmeraum aufweist, steckverbindbar ist. Um die Kupplung zu sichern, ist der Aufnahmeraum segmentiert, wobei die Segmente mittels eines außenseitig umgebenden federbelasteten Schließrings elastisch zustellbar sind. Durch die Zustellkraft wird ein Klemmmoment auf den verzahnten Spindelabschnitt bewirkt.

Aufgrund der engen Bauraumverhältnisse steht der Lenkungsstrang der Montage des Motormoduls mit der Karosserie normalerweise im Weg. Die Bereitstellung eines Zwischenstücks, das die Lenkungskupplung mit dem Ende der Lenkspindel verbindet, ermöglicht, dass dieses an der Schnittstelle, an der es mit dem Lenkspindelende verschraubt ist, im losen Zustand, d. h. unverschraubt, weggeschwenkt werden kann, um die Montage des Motormoduls zu erleichtern. Die Lenkspindel kann in Lenkradrichtung ein Stück weit zurückgeschoben werden. Nach der Montage des Motors muss das Zwischenstück wieder mit dem Lenkspindelende verbunden werden. Dies ist für den Monteur extrem schwer, da der Bauraum für eine handwerkliche Betätigung kaum Spielraum lässt und die Verbindungspartner optisch schlecht erfassbar sind.

Ausgehend von diesem Stand der Technik ergibt sich die Aufgabe, nicht nur das Zusammenführen von Lenkspindelende und Lenkungskupplung zu vereinfachen, sondern auch eine Anordnung zu schaffen, die ermöglicht, dass die zusammengeführten Lenkspindel- und Lenkungskupplungsenden in der richtigen Relativlage zueinander verbunden werden und somit eine Fehlmontage ausgeschlossen werden kann.

Diese Aufgabe wird erfindungsgemäß durch die Merkmale des Patentanspruches 1 gelöst. Weiterbildungen der Vorrichtung sind in den Unteransprüchen ausgeführt.

Gemäß der Erfindung beinhaltet eine Lenkungsanordnung eine Lenkspindel und eine mit einem Gabelkopf versehene Lenkungskupplung. Letztere trägt ein Anschlusselement, mittels dessen ein Ende der Lenkspindel mit der Lenkungskupplung in Form einer Steckverbindung verbunden ist. Das Lenkspindelende und das Anschlusselement sind an einander zugewandten Enden mittels zumindest eines Nut- und Feder-Führungselementepaares, das eine Drehmoment übertragende Zwangsführung bereitstellt, als koaxiale Steckpartner ausgebildet. Jeder der Steckpartner, Lenkspindelende und Anschlusselement, weist dabei zumindest eine als Führungselement gestaltete Nut oder eine korrespondierende Feder auf. Das Anschlusselement wird durch einen hohlen Schaft der Lenkungskupplung gebildet, wobei die zumindest eine Nut und/oder die zumindest eine Feder des Führungselementepaares an der Innenseite des Schaftes ausgeformt ist. Die Lenkungsanordnung beinhaltet zudem eine Spannvorrichtung, mittels derer die Steckpartner in einer Stecklage gegeneinander selbstlösesicher verspannbar sind.

Aufgrund der erfindungsgemäßen Führungselemente, die von einem Monteur ohne Weiteres ertastbar und/oder sichtbar sind, können die Lenkspindel und das Anschlusselement der Kupplung in vorteilhaft einfacher Weise zusammengeführt werden, wobei sie durch die vorgegebene Führung aufgrund der jeweiligen Entsprechung von Nut und Feder immer die richtige Relativlage zueinander einnehmen. Die Spannvorrichtung verbindet die Steckpartner aufgrund der Anpresskraft so, dass die Steckverbindung spielfrei ist und ein ungewolltes Lösen der Steckpartner aus der Stecklage im Fahrbetrieb unterbunden wird. Die durch Nut und Feder gebildeten Führungselemente erstrecken sich ausschließlich längs der Lenkspindelachse. Daher wird eine klemmfreie und für den Monteur leicht auszuführende Handhabbarkeit der Steckpartner zum Erreichen der Steckverbindung ermöglicht. Gegebenenfalls ist es möglich, die Montage mit einer Hand durchzuführen. Aufgrund dessen, dass der bei der üblichen Lenkungskupplung bereits bestehende hohle Schaft, an sich der Gabelkopf anschließt, als Steckpartner dient, kann auf zusätzliche Bauteile, die eine geradlinige Führung vermitteln, verzichtet werden. In einfacher Weise können am hohlen Schaft die Nut(en) und/oder Feder(n) ausgeformt werden.

Vorzugsweise ist der Schaft als Gussteil oder als umgeformtes Hohlprofil ausgebildet, wobei beide am Gabelkopf unlösbar verbunden sind. Dies wird beispielsweise mittels einer Schweißverbindung, insbesondere Laserschweißverbindung bewerkstelligt. Gussteil und Hohlprofil können bevorzugt aus Metall bestehen, wodurch die Schweißverbindung einfach ausgeführt werden kann. Denkbar ist auch, dass das Gussteil ein Spritzgussteil ist und an den Gabelkopf angespritzt wird, falls dies eine betriebssichere Drehmomentübertragung zulässt. Aufgrund der Einteiligkeit des Schweißverbunds kann dieser nachträglich als Ganzes oberflächenbeschichtet werden. Dies war bei bisherigen Ausführungsformen, bei denen die Funktionalität der Steckverbindung zwischen Feder und Nut in separate Bauteile gelegt wurde, nicht möglich.

Bevorzugt weisen das Lenkspindelende und das Anschlusselement mehrere umfangsseitig versetzte Nut- und Feder-Führungselementepaare auf, die unterschiedlich breit ausgebildet sind und/oder asymmetrisch über den Umfang von Lenkspindel und Anschlusselement verteilt sind. Hierdurch wird eine eindeutige Zuordnung der Nut-Federführungselemente der Steckpartner ermöglicht, so dass eine definierte Relativlage des Lenkspindelendes und des Anschlusselementes zueinander festgelegt ist und keine Fehlsteckverbindung bei der Montage erfolgen können. Bei einer symmetrischen Anordnung an der zylindrischen Außenseite des Lenkspindelendes und der Innenseite des Anschlusselementes können bevorzugt jeweils drei Nuten und Federn angeordnet sein, die um 120° versetzt zueinander positioniert sind. Die Anzahl der Nuten kann dabei höher sein als die Anzahl der Federn, so dass für jede Feder des Anschlusselements zumindest eine Nut an dem Lenkspindelende vorliegt. Generell ist natürlich auch denkbar, die Nuten im Anschlusselement und die Federn am Lenkspindelende vorzusehen, oder beides an beiden Steckpartnern wechselweise anzuordnen. Mit einer Mehrzahl an Nuten und Federn wird auch die Fähigkeit der Steckpartner verbessert, höhere Drehmomente zu übertragen.

Besonders bevorzugt weisen Nut und Feder des zumindest einen Nut- und Feder-Führungselementepaares eine Keilform auf, wobei die Nut sich in längsaxialer Richtung zu der von dem Steckpartner abgewandten Seite hin verjüngt, und die Feder sich in längsaxialer Richtung zu der dem Steckpartner zugewandten Seite hin verjüngt. Bei der Verspannung werden die Keilformen gegeneinander gezogen, wodurch sich aufgrund der sich entfaltenden Keilklemmung ein besonders starker Formschluss ausbildet, der zu einer straffen und steifen, weil spielfreien Verbindung der beiden Steckpartner führt. Durch diesen Formschluss wird auch die Lösesicherung der Steckpartner verbessert. Weiterhin wird durch die federbelastete Keilverbindung Spiel unterbunden, das durch Verschleiß der Steckpartner entstehen könnte.

Besonders bevorzugt trägt der Schaft der Lenkungskupplung die Spannvorrichtung. Diese beinhaltet eine Rasthülse, eine Druckfeder und einen Stützring. Der Stützring ist mit dem Schaft der Lenkungskupplung starr verbunden und sitzt koaxial auf dessen Ende auf. Die Verbindung erfolgt vorteilhafter Weise durch eine Expandierung des hohlen Schafts, gesamtheitlich oder lokal. Der metallische Stützring weist dabei Aussparungen auf, in die der hohle Schaft mit Ausprägungen eingreifen kann und sich in den Aussparungen formschlüssig festkeilt, wodurch eine Drehbewegung und eine axiale Bewegung des Stützrings auf dem hohlen Schaft verhindert und eine definierte unverrückbare Lage auf dem Schaft eingestellt wird. Infolge der radialen Expansion wird zudem noch ein Reibschluss zwischen dem Schaft und dem Stützring erreicht, der die Haltbarkeit des Stützringes auf dem Schaft weiter verbessert. Die Druckfeder, vorzugsweise als Schraubenfeder ausgeführt, liegt auf der der Steckrichtung der Lenkspindel abgewandten Seite des Stützrings an. Über die Druckfeder wird die Verspannung erzielt. Die Rasthülse hintergreift den Stützring und die Druckfeder und ist auf dem Schaft dreh- und verschiebebeweglich angeordnet, wobei sie einen axialen Anschlag an der Druckfeder besitzt. Die Rasthülse weist an dem der Druckfeder abgewandten Ende zumindest einen radial nach innen weisenden Vorsprung oder eine Nut auf, der in der Breite mit der Nut oder die mit der Feder des Lenkspindelendes korrespondiert. Weiterhin ist am Lenkspindelende ein Hinterschnitt ausgebildet, an den sich die zumindest eine Nut und/oder die zumindest eine Feder des Lenkspindelendes anschließt. Der Hinterschnitt kann ein stufiger Absatz oder eine Ringnut oder aber eine verrrundete konische Verjüngung des Lenkspindelendes sein.

Um die Verspannung vorteilhaft zu erzielen, ist nach Erzielen des Steckverbundes der beiden Steckpartner die Rasthülse entgegen der Federkraft axial anzuheben, wobei beispielhaft der oder die Vorsprünge durch die Nuten des Lenkspindelendes gleitet bis der Hinterschnitt erreicht ist. Hiernach kann die Hülse gedreht werden, wonach der oder die Vorspünge mittels einer Drehung der Hülse hinter einer Feder des Lenkspindelendes platziert werden können. Die Hülse wird dann losgelassen, wonach sie mit dem oder den Vorsprüngen an der/den Federn hinten anschlägt. Die Druckfeder wird entlastet, zieht die Steckpartner dadurch zusammen und verspannt sie somit.

In einer bevorzugten Ausführungsform weist die Rasthülse auf der Druckfeder abgewandten Seite einen nach innen kragenden endseitigen Ringbund auf, der den Stützring überdeckend umgreift. Der Ringbund hat vorzugsweise die Breite des Stützrings und überdeckt diesen vollständig. Von diesem Ringbund steht der zumindest eine Vorsprung radial nach innen ab. Der Ringbund weist darüber hinaus - bezüglich seiner Breite in etwa mittig gelegen - zumindest eine Durchtrittsöffnung auf, in die ein Zapfen eintaucht, der an der von der Druckfeder abgewandten Stirnseite des Stützringes angeordnet ist. Der Zapfen ist im überdeckten Bereich des Stützrings angeordnet. Die Durchtrittsöffnung(en) am Ringbund ist/sind in Umfangsrichtung derart versetzt zu dem Vorsprung oder Vorsprüngen angeordnet, dass beim Eintauchen des Zapfens in die Durchtrittsöffnung der benachbarte Vorsprung hinten an einer Feder anliegt. Bei drei Durchtrittsöffnungen, die um 120° versetzt zueinander angeordnet sind, liegen die benachbarten Vorsprünge jeweils um 45° zu diesen in Umfangsrichtung versetzt. Beim Drehen der Hülse steht der oder stehen die Zapfen an der Innenseite des Ringbunds auf bis er oder sie in die Durchtrittsöffnung eintaucht/eintauchen. Dann ist nicht nur garantiert, dass der Vorsprung der Hülse hinter einer Feder des Lenkspindelendes angeschlagen hat, sondern die Verspannung ist durch das Eintauchen des Zapfens in die Durchtrittsöffnung quasi verriegelt, das heißt eine lösesichere Verspannung ist erreicht und eine ungewollte Demontage praktisch nicht mehr möglich. Durchtrittsöffnung und Zapfen können derart aufeinander abgestimmt sein, dass ihre Form und Abmessungen einander entsprechen, so dass der Zapfen definiert in die Öffnung eintaucht und ein direkter Formschluss und dadurch eine definierte Lage des Zapfens in der Öffnung gegeben ist. Beim Eintauchen entlastet die Druckfeder noch weiter, was sich in einem merklichen Einrasten bemerkbar macht, das für den Monteur hörbar und taktil erfahrbar ist.

Bevorzugt ist die Länge des Zapfens nicht nur derart, dass dieser in die Durchtrittsöffnung eintaucht, sondern so, dass er diese durchragt. So kann er auch haptisch erfassen, ob die Montage beendet ist. Bei Ertasten des überstehenden Zapfens ist die Verspannung vollendet und der Montagevorgang abgeschlossen. Im Falle, dass es aus irgendwelchen Gründen erforderlich ist, eine bestimmte Drehlage der Hülse relativ zum Stützring einzunehmen, ist es denkbar, dass die Zapfen und entsprechend die Durchtrittsöffnungen unterschiedliche Formen aufweisen, so dass genau ein Zapfen einer Durchtrittöffnung zugeordnet werden kann und keine Fehlstellung auftritt.

Bevorzugt beinhaltet die Spannvorrichtung einen Steuerring, der an der Druckfeder dem Stützring gegenüber liegend anliegt und der auf der dem Stützring abgewandten Stirnseite zumindest eine vorzugsweise rampenförmige Steuerkontur aufweist, an der die Rasthülse mit einem Steuernocken anliegt. Der Steuerring weist an seinem Innenumfang zumindest einen Führungszapfen auf, der in eine am Schaft außenseitig verlaufende axiale Führungsnut eingreift. Der Steuerring ist damit drehfest angeordnet und allein axial beweglich, wobei das eine Nutende zum Gabelkopf hin einen Anschlag für den Steuerring bildet. Mit drei Führungszapfen, die um 120° versetzt am Steuerring angeordnet sind und in jeweils eine ihnen zugeordnete Führungsnut des Schaftes greifen, ist der Steuerring kippsicher geführt. Mit anderen Worten weist der Schaft entsprechend drei Führungsnuten auf, die ebenfalls in Umfangsrichtung um 120° versetzt zueinander angeordnet sind. In fertigungstechnisch vorteilhafter Weise wird die jeweilige Führungsnut durch die kanalartige Außenseite einer durch Einprägen des Schaftes entstandene Feder des Nut/Feder-Führungselementepaars gebildet. Der Steuerring bildet nunmehr einen Gegenanschlag für die Druckfeder hinsichtlich des Stützringes. Aufgrund der Anlage der Rasthülse über den mindestens einen Steuernocken, der am ringbundabgewandten Ende ausgebildet ist, ist die Druckfeder mittelbar an der Rasthülse gehalten. Die Rasthülse ist durch ihre Anlage am Steuerring über die Führungsnuten straff axial geführt. Durch die Ausbildung einer Steuerkontur, vorzugsweise in Rampenform oder Wendelform wird die Verdrehung der Rasthülse nach Erreichen des Hinterschnitts bis in die Verriegelungsposition erleichtert. Je weiter sich der Steuernocken der Rasthülse auf der Rampenbahn dem Stützring nähert, umso mehr wird die Druckfeder entspannt und die Drehbewegung leichtgängiger bis die Zapfen des Stützrings in die Durchtrittsöffnungen einschnappen. Aufgrund der fortschreitenden Entlastung wird die Härte des Einschnappens entschärft, was die zusammenwirkenden Bauteile der Lenkanordnung schont.

Die Steuerkontur hat zwei Anschläge, zwischen denen der Steuernocken verfahrbar ist. Vorzugsweise sind am Steuerring drei gleichgestaltete Steuerkonturen ausgebildet, die sich aneinander anschließen und die von jeweils einem Steuernocken beaufschlagt werden. Die Steuernocken sind an der Innenseite der Rasthülse ausgebildet, schließen bündig mit der Abschlußkante der Rasthülse ab. Infolge dessen ist die Steuerkontur des Steuerrings von der Rasthülse verdeckt. Bevorzugter Weise ist der Anschlag, an dem die Rasthülse in Öffnungsstellung anliegt, länger ausgeführt als der andere Anschlag und dient als Montagepositionsanzeige. Mit anderen Worten schaut eine Nase des Anschlags unter der Rasthülse hervor, wenn die Rasthülse auf den Zapfen des Stützrings eingeschnappt ist und mit ihren Steuernocken am anderen Anschlag anliegt. Dies ist für den Werker, der die Schnittstelle zwischen Lenkungskupplung und Lenkspindel nur von der Seite des Gabelkopfes aus sieht, gleichfalls eine optische Rückmeldung, dass die Montage richtig abgeschlossen ist. Eine weitere Erleichterung dieser Rückmeldung kann darin bestehen, dass die Rasthülse außenseitig mit Symbolen oder anderen Markierungen versehen ist, die eine Verriegelungsstellung und eine Entriegelungsstellung kennzeichnen. Bei Überdeckung mit der Nase des Anschlags mit dem Zeichen der Verriegelung ist dann für den Werker völlig klar, dass die Montage abgeschlossen ist und richtig ausgeführt wurde.

In einer bevorzugten Ausführungsform weist die Rasthülse zumindest eine federelastische Klemmlasche auf, die vom Innenumfang der Hülse schräg abragt und an der Stirnseite des Stützrings, an der sich die Druckfeder abstützt, aufsteht. Im Laufe des Fahrbetriebs und/oder aufgrund von Materialfehlern ist es denkbar, dass die als Schraubenfeder ausgebildete Druckfeder bricht. Um eine Lösung der Rasthülse aus ihrer Verriegelungsstellung durch fahrbedingte Vibrationen zu verhindern, dient die Klemmlasche als Sperre gegen Axialbewegungen, die aus den Vibrationen resultieren.

In einer weiteren bevorzugten Weiterbildung der Erfindung ist an der Innenseite des Ringbundes der Rasthülse zumindest eine flache Mulde ausgebildet, die die Kontur des Zapfens des Stützrings aufweist und in die der Zapfen positionierbar ist. Hierdurch wird eine Transportsicherung der Lenkungskupplung mit dem Anschlusselement von der Herstellungsstätte zum Einbau gewährleistet. Aufgrund der Flachheit der Mulde kann der Werker ohne größere körperliche Anstrengung den Zapfen aus der Mulde drehen, jedoch ist die Mulde wiederum so tief, dass eine unerwünschte Verdrehung während der Anlieferung ausgeschlossen ist.

In einer weiteren besonders bevorzugten Ausführungsform beinhaltet die Lenkungsanordnung bei mehreren umfangsseitig versetzten Nut- und Feder-Führungselementepaaren eine zusätzliche Zuordnungseinrichtung für die Nuten und Federn der Steckpartner. Zwar ist eine eindeutige Zuordnung der Nuten und Federn durch die oben genannte entsprechende Ausbildung der Nutenbreiten oder die asymmetrische Anordnung der Nuten oder zusätzliche Nuten gegeben. Jedoch kann es vorkommen, dass trotz einer Fehlstellung der Steckpartner ein Einfädeln der Federn in die Nuten und umkehrt bis zu einem bestimmten Grad, d.h. über eine begrenzte Länge möglich ist. Der Werker, der natürlich die Einfädelbewegung nicht vollständig durchführen kann, wird die Steckpartner versuchen auszufädeln. Dies kann aufgrund geringer Klemmwirkungen zwischen den Steckpartnern sehr hakelig von statten gehen, was Kraft, Geduld und Zeit für den Werker erfordert. Um diesem möglichen Missstand zu begegnen wird die Lenkungsanordnung mit einer Zuordnungseinrichtung ausgerüstet. Diese Einrichtung enthält unterschiedlich geformte Konturelemente, die an der Rasthülse am Gabelkopf abgewandten Ende ausgebildet sind und radial einwärts ragen. Diese sind zu den Vorsprüngen versetzt angeordnet und ebenfalls wie die Vorsprünge einstückig mit der Rasthülse verbunden. Beispielsweise sind die Konturelemente Konvexitäten, die mehr oder minder flach ausgeformt sind.

Des Weiteren weist die Zuordnungseinrichtung einen Orientierungszapfen auf, der am Lenkspindelende koaxial vorgelagert angeordnet ist und am Umfang zu den Konturelementen der Rasthülse formnegative Konturelemente besitzt. Der Durchmesser des Zapfens mit seinen Konturelementen ist kleiner als der Durchmesser der lichten Weite des Schaftes, damit der Zapfen in den Schaft geschoben werden kann und nicht die Steckverbindung der beiden Steckpartner verhindert. Der Zapfen ist so dimensioniert, dass beim Einführen des Zapfens in die Rasthülse die Konturelemente der Rasthülse und des Zapfens bei Übereinstimmung der Konturen mit Spiel ineinander greifen. Bei einer Fehlstellung ist ein Einführen nicht möglich. Somit wird eine eindeutige Zuordnung der Steckpartner bereits getroffen, bevor die Steckverbindung eingegangen wird. Ein hakeliges Ausfädeln bei Fehlstellungen entfällt vollkommen.

Schließlich sind noch Konturelemente in den Federn des Lenkspindelendes hinter den Konturelementen des Zapfens in gleicher Radiallage ausgebildet, um bei einer richtigen Positionierung zwischen den Konturelementen des Zapfens und der Hülse eine weitere Einführbewegung nicht zu behindern. Hierbei sind die Konturelemente in den Federn so ausgeformt, dass sie mit Spiel an den Konturelementen der Rasthülse vorbeiführbar sind. In einer besonders bevorzugten Weiterbildung weist die Lenkungsanordnung einen Stopfen auf, der in das Ende der hohlen Lenkspindel hineingepresst ist und diese dichtend verschließt. Hierdurch wird ein Eindringen von Schmutz und korrodierenden Medien in die Lenkspindel vermieden. Zudem dient er als Schutz gegen Geräusche aus dem weiteren Lenkungsstrang und dem Motorraum. In praktischer Ausführung ist der Stopfen einstückig mit dem Orientierungszapfen verbunden. Der Stopfen kann dabei aus einem Elastomer, Kunststoff oder einem gummielastischen Material bestehen.

Diese und weitere Vorteile werden durch die nachfolgende Beschreibung unter Bezug auf die begleitenden Figuren dargelegt. Der Bezug auf die Figuren in der Beschreibung dient der Unterstützung der Beschreibung und dem erleichterten Verständnis des Gegenstands. Gegenstände oder Teile von Gegenständen, die im Wesentlichen gleich oder ähnlich sind, können mit denselben Bezugszeichen versehen sein. Die Figuren sind lediglich eine schematische Darstellung einer Ausführungsform der Erfindung.

Dabei zeigen:
- Fig. 1: In einer perspektivischen Ansicht eine erfindungsgemäße Lenkungsanordnung im Zusammenbau,
- Fig. 2: In einem seitlichen Längsschnitt die Lenkungsanordnung aus Fig. 1,
- Fig. 3: In einem Querschnitt das Anschlusselement der Lenkungskupplung einer erfindungsgemäßen Lenkungsanordnung ohne Steckverbindung mit einer Lenkspindel,
- Fig. 4: In eine perspektivischen Darstellung einen Ausschnitt einer erfindungsgemäßen Lenkungsanordnung im Zusammenbau ohne Rasthülse,
- Fig. 5: In einer perspektivischen Ansicht das Lenkspindelende einer erfindungsgemäßen Lenkungsanordnung mit einer Zuordnungseinrichtung,
- Fig. 6: Perspektivisch die Zuordnungseinrichtung aus Fig. 5 beim Einfädeln in eine Rasthülse der Lenkungsanordnung,
- Fig. 7: In einer frontalen Ansicht von der Rasthülsenunterseite den Einfädelvorgang aus Fig. 6.

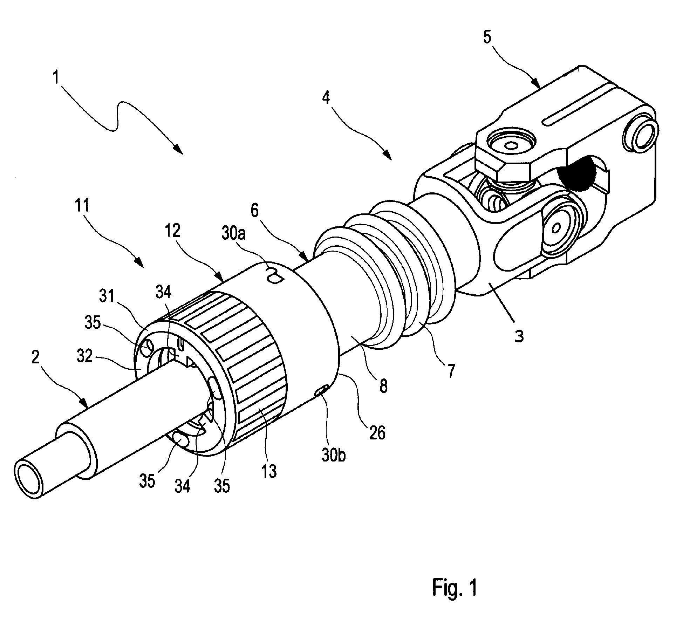

In Fig. 1 ist eine zusammengebaute Lenkungsanordnung 1 mit einer Lenkspindel 2 und einer mit einem Gabelkopf 3 versehene Lenkungskupplung 4 dargestellt. Der Gabelkopf 3 ist Bestandteil eines Kreuzgelenks 5, das die Lenkungsanordnung 1 mit einem Lenkgetriebe verbindet. An den Gabelkopf 3 schließt sich zur anderen Seite ein hohler Schaft 6 an, der mit dem Gabelkopf 3 mittels einer Laserschweißung verbunden ist und der einen Wellrohrabschnitt 7 aufweist. An den Wellrohrabschnitt 7 schließt sich in der Folge ein länglicher zylindrischer Abschnitt 8 des Schafts 6 an. Der Schaft 6 kann ein Gussteil oder ein umgeformtes Hohlprofil sein, vorzugsweise jedoch metallisch.

Der zylindrische Abschnitt 8 des Schaftes 6 trägt ein Anschlusselement 9, mittels dessen ein Ende 10 der Lenkspindel 2 mit der Lenkungskupplung 4 in Form einer Steckverbindung verbunden ist. Weiterhin trägt der Schaft 6 eine Spannvorrichtung 11, die unter anderem eine Rasthülse 12 beinhaltet, welchen den Schaft 6 koaxial umgibt und dort dreh- und verschiebebeweglich angeordnet ist. Mittels der Spannvorrichtung 11 sind die Steckpartner - Lenkspindelende 10 und Anschlusselement 9 - in der Stecklage gegeneinander selbstlösesicher verspannt.

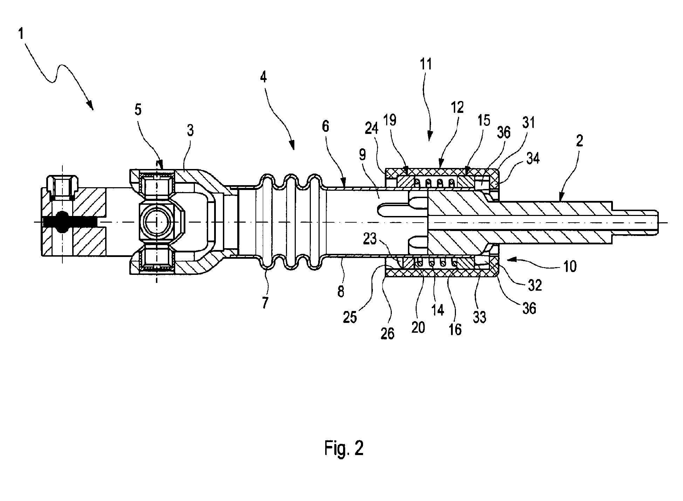

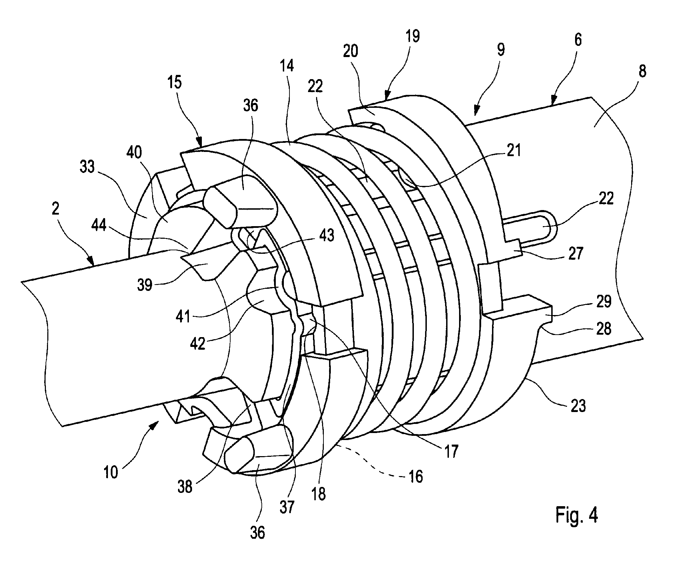

Die Rasthülse 12 weist an ihrem Außenumfang eine Rändelung 13 zur erleichterten Handhabung der Rasthülsenbetätigung auf. Wie speziell aus den Fig. 2 und 4 ersichtlich ist, beinhaltet die Spannvorrichtung 11 eine Druckfeder 14 in Form einer Schraubenfeder und einen Stützring 15. Der Stützring 15 ist mit dem Schaft 6 starr verbunden und bildet mit seiner der Steckrichtung der Lenkspindel 2 abgewandten Seite 16 einen Anschlag für die Druckfeder 14, die sich dort fortwährend abstützt. Die starre Verbindung rührt von einer Aufweitung des hohlen Schaftes 6, die einen Presssitz des Stützrings 15 zur Folge hat, und von Verprägungen 17 des Schaftes 6, die in Ausnehmungen 18 des Stützrings 15 hineingepresst sind und für einen Formschluss sorgen.

Die Spannvorrichtung 11 beinhaltet zudem einen Steuerring 19, der an der Druckfeder 14 dem Stützring 15 gegenüber liegend mit einer Stirnseite 20 anliegt und für diese den Gegenanschlag zum Stützring 15 bildet. Der Steuerring 19 weist an seinem Innenumfang Führungszapfen 21 auf (Fig. 4), die in axial verlaufende am Außenumfang des Anschlusselementes 9 eingeformte Führungsnuten 22 eingreifen. Der Steuerring 19 weist auf seiner dem Stützring 15 abgewandten Stirnseite drei rampenförmige Steuerkonturen 23 auf, an der die Rasthülse 12 mit jeweils einem Steuernocken 24 anliegt. Die Rasthülse 12 hintergreift dabei den Stützring 15 und die Druckfeder 14 mit den Steuernocken 24 (Fig. 2), die an der Innenseite 25 der Rasthülse 12 angeformt sind und bündig mit ihrer dem Gabelkopf 3 zugewandten Abschlusskante 26 abschließen.

Die jeweilige Steuerkontur 23 hat zwei Anschläge 27 und 28, zwischen denen der Steuernocken 24 verfahrbar ist. Der Anschlag 28, an dem die Rasthülse 12 in Öffnungsstellung anliegt, ist länger ausgeführt als der andere Anschlag 27 und dient als Montagepositionsanzeige, wobei eine Nase 29 des Anschlags 28 sichtbar wird, wenn die Montage richtig vollzogen wurde. Die Rasthülse 12 liegt in diesem Fall mit ihren Steuernocken 24 am anderen Anschlag 27 an. Zur zweifelsfreien Erkennung des Montagezustands ist die Rasthülse 12 außenseitig mit Verriegelungssymbolen 30a,b (Schloss geöffnet 30 a oder geschlossen 30b) gekennzeichnet (Fig. 1), wobei in der Verriegelungsposition das "Schloss-geschlossen"-Symbol 30b die gleiche Radiallage einnimmt wie die Nase 29 des Anschlags 28.

Die Rasthülse 12 weist an ihrem anderen Ende 31 einen nach innen kragenden Ringbund 32 auf, der den Stützring 15 auf Druckfeder 14 abgewandter Stirnseite 33 überdeckend umgreift. Von dem Ringbund 32 stehen drei radial nach innen weisend zahnartige Vorsprünge 34 ab, die in Umfangrichtung um 120° zueinander versetzt sind. Um 45° in Umfangsrichtung von den Vorsprüngen 34 versetzt sind im Ringbund 32 drei ovale Durchtrittsöffnungen 35 ausgebildet (siehe insbesondere Fig.1). Diese korrespondieren mit drei Zapfen 36 (Fig. 4), die an der von der Druckfeder 14 abgewandten Stirnseite 33 des Stützrings 15 ausgebildet sind und axial abstehen.

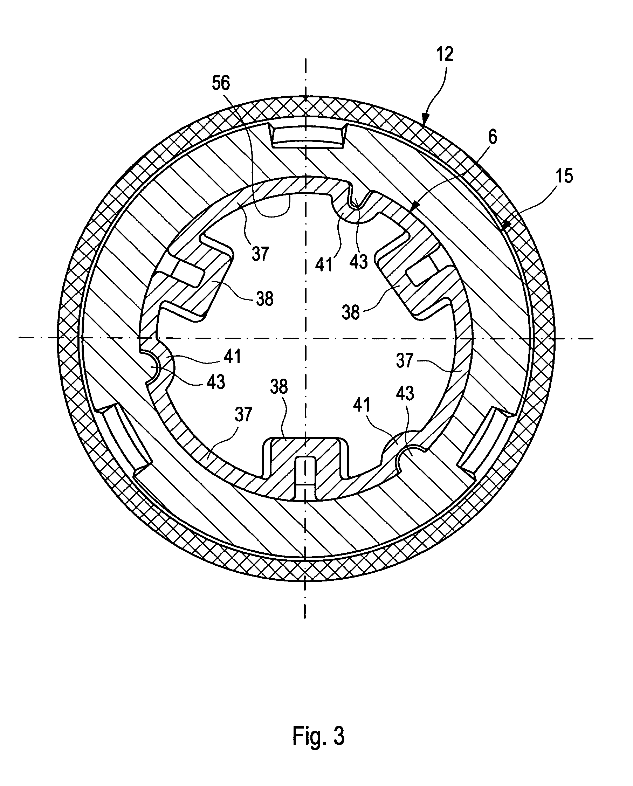

Zur Bildung der Steckverbindung sind das Lenkspindelende 2 und das Anschlusselement 9 an den einander zugewandten Enden mit jeweils drei Nut- und Feder-Führungselementepaaren 37,38 und 39,40 ausgestattet, die eine Drehmoment übertragende Zwangsführung bereitstellen und koaxiale Steckpartner bilden. Wie besonders in Fig. 3 verdeutlicht ist, sind die Nuten 37 und die Federn 38 an der Innenseite 56 des Schaftes 6 ausgeformt und innenumfangsseitig voneinander um 120° versetzt, wobei die Nuten 37 durch die Federn 38 getrennt sind. Die Nuten 37 und Federn 38 sind unterschiedlich breit ausgebildet und weisen eine Keilform auf, wobei die Nut 37 sich in längsaxialer Richtung zu der von dem Steckpartner abgewandten Seite und die Feder 38 sich in längsaxialer Richtung zu der dem Steckpartner zugewandten Seite hin verjüngt. Breite und Form sind auf die korrespondierenden Nuten 39 und Federn 40 abgestimmt, die am Außenumfang des Endes 10 der Lenkspindel 2 ausgebildet sind. Somit ist eine eindeutige Zuordnung der Relativlage von Lenkspindel 2 zur Lenkungskupplung 4 geschaffen um eine Steckverbindung korrekt auszuführen.

Zusätzlich weist der Schaft 6 der Lenkungskupplung 4 noch Konvexitäten 41 unterschiedlicher Auswölbung auf, die auf formnegative Zuordnungsnuten 42 abgestimmt sind, die in den Federn 40 des Lenkspindelendes 10 eingeformt sind. Hierdurch wird die Zuordnung zwischen den Steckpartnern noch weiter verbessert und die Sicherheit einer korrekten Montage durch die Einnahme der vorgesehenen Relativlage der Steckpartner zueinander erhöht.

Die Konvexitäten 41 des Schaftes 6 können als Führungsnuten 22 verwandt werden. Des Weiteren ist es für eine sichere Montage des Stützringes 15 auf dem Schaft 6 möglich, einen Fixierungszapfen 43 an dem Innenumfang des Stützrings 15 vorzusehen, der in eine der Nuten 37 eingreift. Der Fixierungszapfen 43 dient in gleicher Weise als Orientierung für die Einnahme der vorbestimmten Drehlage des Stützrings 15 auf dem Schaft 6 relativ zum Gabelkopf 3.

Der jeweilige Vorsprung 34 der Rasthülse 12 korrespondiert insoweit in der Breite mit der Nut 39 des Lenkspindelendes 10, als dass er in der Nut 39 sicher geführt ist. Das Lenkspindelende 10 ist im Übrigen mit einem Hinterschnitt 44 ausgebildet, an den sich die Nut 39 des Lenkspindelendes 10 anschließt. Der Hinterschnitt 44 ist hier eine umfängliche konische, verrundete Verjüngung, die den Übergang des Nut-Feder-Abschnitts in den glattzylindrischen Teil der Lenkspindel 2 bildet.

Zur Erreichung einer selbstlösesicheren Verbindung zwischen der Lenkspindel 2 und der Lenkungskupplung 4 werden diese zuerst entsprechend der einander zugeordneten Nuten und Federn 37, 38 und 39, 40 sowie den Konvexitäten 41 und Zuordnungsnuten 42 in der korrekten Relativlage zusammengesteckt, wobei das Ende 10 der Lenkspindel 2 durch die Rasthülse 12 an deren Vorsprüngen 34 durchgefädelt wird. Als dann wird die Rasthülse 12 in Richtung der Lenkspindel 2 angehoben, wobei die Vorsprünge 34 in den Nuten 39 der Lenkspindel 2 entlang gleiten. Bei Erreichen des Hinterschnitts 44 wird die Rasthülse 12 gedreht, wobei deren Steuernocken 24 entlang der Steuerkonturen 23 verfahren werden. Die Drehung erfolgt solange bis die Durchtrittsöffnungen 35 des Ringbundes 32 der Rasthülse 12 die Zapfen 36 des Stützringes 15 erreicht haben und diese in die Öffnungen 35 eintauchen. Da sich die Druckfeder 14 teilweise entspannt schnappt die Rasthülse 12 auf dem Stützring 15 ein. Hierbei ist dann aufgrund der relativen Drehlage der Vorsprünge 34 zu den Durchtrittöffnungen 35 bzw. den Zapfen 36 die Rasthülse 12 gesichert, wobei die Vorsprünge 34 hinter jeweils einer Feder 40 des Lenkspindelendes 10 zu liegen kommen. Infolge der damit erwirkten Verspannung der beiden Steckpartner werden die Keilflächen der Nuten und Federn 37, 38, 39, 40 zusammengeschoben, wodurch eine Keilklemmung ausgelöst wird, die die Steckpartner besonders fest aneinander bindet.

Die Rasthülse 12 weist im Übrigen noch zumindest eine federelastische Klemmlasche auf (hier nicht dargestellt), die vom Innenumfang der Hülse 12 schräg abragt und an der Stirnseite 16 des Stützrings 15, an der sich die Druckfeder 14 abstützt, in verriegeltem Zustand aufsteht.

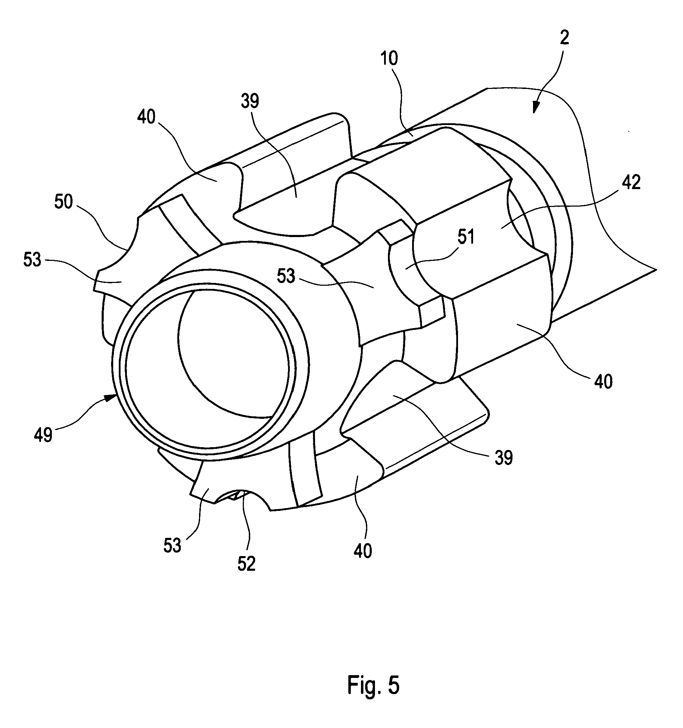

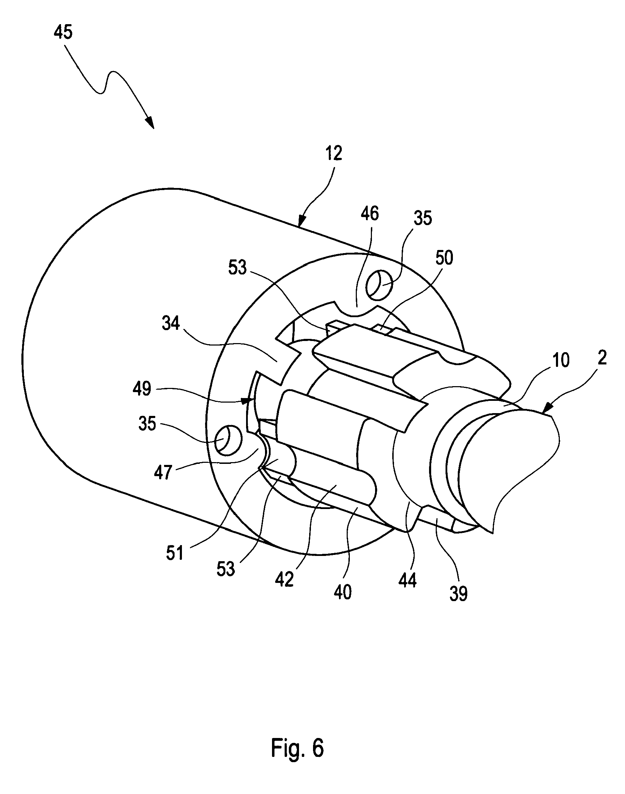

Die Lenkungsanordnung beinhaltet weiterhin eine zusätzliche Zuordnungseinrichtung 45, wie in den Fig. 5-7 dargestellt ist. Diese Einrichtung 45 enthält drei unterschiedlich geformte konvexe Konturelemente 46,47,48, die an der Rasthülse 12 am Gabelkopf 3 abgewandten Ende ausgebildet sind und radial einwärts ragen. Diese sind zu den Vorsprüngen 34 in Umfangsrichtung versetzt angeordnet und ebenfalls wie die Vorsprünge 34 einstückig mit der Rasthülse 12 verbunden.

Die Zuordnungseinrichtung 45 beinhaltet zudem einen Orientierungszapfen 49, der am Lenkspindelende 10 koaxial vorgelagert angeordnet ist und am Umfang zu den Konturelementen 46-48 der Rasthülse 12 formnegative Konturelemente 50-52 besitzt. Im konkreten Fall sind am Außenumfang des hohlzylindrischen Zapfens 49 radial abstehende Stege 53 in Form von Windmühlenflügeln ausgebildet, die an ihrem freien Ende die Konturelemente 50-52 in Form von Konkavitäten tragen. Der Durchmesser des Zapfens 49 ist mit seinen Konturelementen 50-52 kleiner als der Durchmesser der lichten Weite des Schaftes 6, damit der Zapfen 49 in den Schaft 6 geschoben werden kann und nicht die Steckverbindung der beiden Steckpartner verhindert. Der Zapfen 49 ist so dimensioniert, dass beim Einführen in die Rasthülse 12 die Konturelemente 46-48 der Rasthülse 12 und die Konturelemente 50-52 des Zapfens 49 bei Übereinstimmung der Konturen mit Spiel ineinander greifen.

Schließlich sind noch Konturelemente in den Federn 40 des Lenkspindelendes 10 hinter den Konturelementen 50-52 des Zapfens 49 in gleicher Radiallage ausgebildet. Hierbei sind die Konturelemente in den Federn 40 so ausgeformt, dass sie mit Spiel an den Konturelementen 46-48 der Rasthülse 12 vorbeiführbar sind, wenn die radiale Relativlage zueinander stimmt. Die Konturelemente, die in den Federn 40 des Lenkspindelendes 10 ausgebildet sind, entsprechen den Konturelementen 50-52 des Zapfens 49 in Form und Querschnitt und sind zu diesen fluchtend angeordnet. Die Konturelemente der Federn 40 können im Übrigen mit den Zuordnungsnuten 42 übereinstimmen (Fig.4).

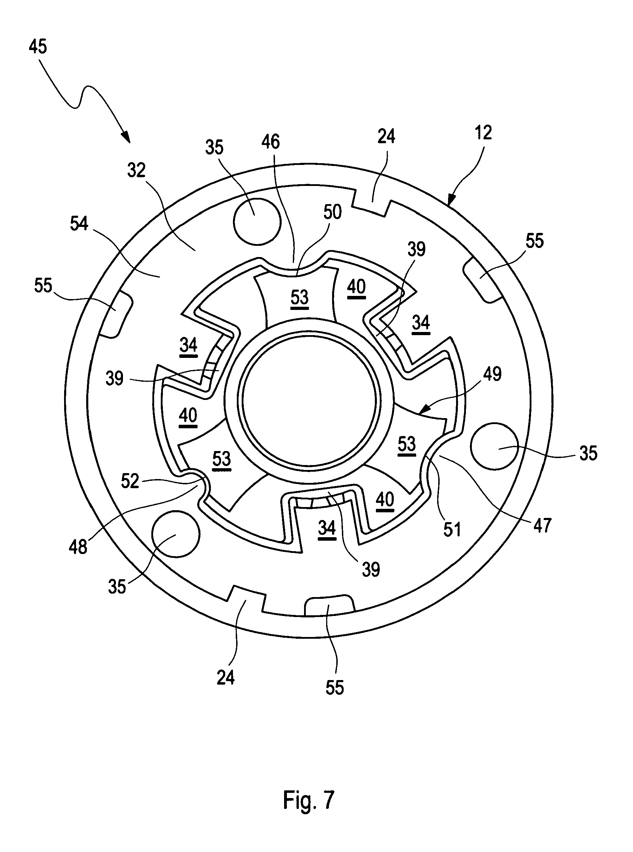

Der Zapfen 49 bildet einen Stopfen, der das Ende 10 der hohlen Lenkspindel 2 dichtend verschließt. Schließlich sind, wie aus Fig. 7 entnehmbar, an der Innenseite 54 des Ringbundes 32 drei flache Mulden 55 ausgebildet, die die Kontur des Zapfens 36 des Stützrings 15 aufweisen und in die die Zapfen 36 positionierbar sind. Dadurch ist ein Drehen der Rasthülse 12 nur unter erhöhter Kraft möglich, wodurch eine Transportsicherung realisiert wird.

## Patentansprüche

1. Lenkungsanordnung (1) mit einer Lenkspindel (2) und einer mit einem Gabelkopf (3) versehene Lenkungskupplung (4), welche ein Anschlusselement (9) trägt, mittels dessen ein Ende (10) der Lenkspindel (2) mit der Lenkungskupplung (4) in Form einer Steckverbindung verbunden ist,
**dadurch gekennzeichnet,**
**dass** das Lenkspindelende (10) und das Anschlusselement (9) an einander zugewandten Enden mittels zumindest eines Nut- und Feder-Führungselementepaares (37,38,39,40), das eine Drehmoment übertragende Zwangsführung bereitstellt, als koaxiale Steckpartner ausgebildet sind,
**dass** das Anschlusselement (9) einen hohlen Schaft (6) der Lenkungskupplung (4) bildet, wobei die zumindest eine Nut (37,39) und/oder die zumindest eine Feder (38,40) des Führungselementepaares an der Innenseite (56) des Schaftes (6) ausgeformt ist,
und **dass** die Lenkungsanordnung (1) eine Spannvorrichtung (11) beinhaltet, mittels derer die Steckpartner in einer Stecklage gegeneinander selbstlösesicher verspannbar sind.

2. Lenkungsanordnung nach Anspruch 1,
**dadurch gekennzeichnet,**
**dass** das Lenkspindelende (10) und das Anschlusselement (9) mehrere umfangsseitig versetzte Nut- und Feder-Führungselementepaare (37,38,39,40) aufweist, die unterschiedlich breit ausgebildet sind und/oder asymmetrisch über den Umfang von Lenkspindelende (10) und Anschlusselement (9) verteilt sind.

3. Lenkungsanordnung nach einem der Ansprüche 1 oder 2,
**dadurch gekennzeichnet,**
**dass** der Schaft (6) der Lenkungskupplung (4) die Spannvorrichtung (11) trägt, die eine Rasthülse (12), eine Druckfeder (14) und einen Stützring (15) beinhaltet,
- wobei der Stützring (15) mit dem Schaft (6) starr verbunden ist und die Druckfeder (14) auf der in Steckrichtung der Lenkspindel (2) abgewandten Seite (16) des Stützrings (15) anliegt,
- wobei die Rasthülse (12) den Stützring (15) und die Druckfeder (14) hintergreift und auf dem Schaft (6) dreh- und verschiebebeweglich angeordnet ist,
- wobei die Rasthülse (12) an dem der Druckfeder (14) abgewandten Ende (31) zumindest einen radial nach innen weisenden Vorsprung (34) oder eine Nut aufweist, der in der Breite mit der Nut (39) oder die mit der Feder des Lenkspindelendes (10) korrespondiert,
- wobei am Lenkspindelende (10) ein Hinterschnitt (44) ausgebildet ist, an den sich die zumindest eine Nut (39) und/oder die zumindest eine Feder (40) des Lenkspindelendes (10) anschließt.

4. Lenkungsanordnung nach Anspruch 3,
**dadurch gekennzeichnet,**
**dass** die Rasthülse (12) einen nach innen kragenden endseitigen Ringbund (32) aufweist, der den Stützring (15) auf Druckfeder (14) abgewandter Seite (33) überdeckend umgreift und von dem der zumindest eine Vorsprung (34) vom Ringbund (32) radial nach innen absteht,
**dass** im Ringbund (32) zumindest eine Durchtrittsöffnung (35) ausgebildet ist, und dass der Stützring (15) an seiner von der Druckfeder (14) abgewandten Stirnseite (33) wenigstens einen Zapfen (36) aufweist, der im überdeckten Bereich angeordnet ist und mit der Durchtrittsöffnung (35) korrespondiert.

5. Lenkungsanordnung nach einem der Ansprüche 3 oder 4,
**dadurch gekennzeichnet,**
**dass** die Spannvorrichtung (11) einen Steuerring (19) beinhaltet, der an der Druckfeder (14) dem Stützring (15) gegenüber liegend anliegt und der auf der dem Stützring (15) abgewandten Stirnseite zumindest eine vorzugsweise rampenförmige Steuerkontur (23) aufweist, an der die Rasthülse (12) mit einem Steuernocken (24) anliegt,
und **dass** der Schaft (6) außenseitig zumindest eine axial verlaufende Führungsnut (22) aufweist, in die der Steuerring (19) mit einem an seinem Innenumfang ausgebildeten Führungszapfen (21) eingreift.

6. Lenkungsanordnung nach einem der Ansprüche 3 bis 5,
**dadurch gekennzeichnet,**
**dass** die Lenkungsanordnung (1) bei mehreren umfangsseitig versetzten Nut- und Feder-Führungselementepaaren (37,38,39,40) eine Zuordnungseinrichtung (45) beinhaltet, wobei diese folgende Bestandteile umfasst:
- unterschiedlich geformte Konturelemente (46,47,48), die an der Rasthülse (12) am Gabelkopf (3) abgewandten Ende (31) ausgebildet sind und radial einwärts ragen,
- ein Orientierungszapfen (49), der am Lenkspindelende (10) koaxial vorgelagert angeordnet ist und radial nach außen abragende zu den Konturelementen (46,47,48) der Rasthülse (12) formnegative Konturelemente (50,51,52) aufweist, wobei der Durchmesser des Zapfens (49) mit seinen Konturelementen (50,51,52) kleiner ist als der Durchmesser der lichten Weite des Schaftes (6),
- Konturelemente (42), die in den Federn (40) des Lenkspindelendes (10) ausgebildet sind, wobei sie mit den Konturelementen (50,51,52) des Zapfens (49) formgleich und mit gleicher Querschnittsgröße ausgebildet und zu diesen fluchtend angeordnet sind.

7. Lenkungsanordnung nach einem der Ansprüche 1 bis 6,
**dadurch gekennzeichnet,**
**dass** die Lenkungsanordnung (1) einen Stopfen aufweist, der das Ende (10) der hohlen Lenkspindel (2) dichtend verschließt.

8. Lenkungsanordnung nach einem der Ansprüche 1 bis 7,
**dadurch gekennzeichnet,**
**dass** die Nut (37,39) und die Feder (38,40) des zumindest einen Nut- und Feder-Führungselementepaares eine Keilform aufweisen, wobei die Nut (37,39) sich in längsaxialer Richtung zu der von dem Steckpartner abgewandten Seite hin verjüngt, und die Feder (38,40) sich in längsaxialer Richtung zu der dem Steckpartner zugewandten Seite hin verjüngt.

9. Lenkungsanordnung nach einem der Ansprüche 3 bis 8,
**dadurch gekennzeichnet,**
**dass** die Rasthülse (12) zumindest eine federelastische Klemmlasche aufweist, die vom Innenumfang der Hülse (12) schräg abragt und an der Stirnseite (16) des Stützrings (15), an der sich die Druckfeder (14) abstützt, in verriegeltem Zustand aufsteht.

10. Lenkungsanordnung nach einem der Ansprüche 4 bis 9,
**dadurch gekennzeichnet,**
**dass** an der Innenseite (54) des Ringbundes (32) zumindest eine flache Mulde (55) ausgebildet ist, die die Kontur eines Zapfens (36) des Stützrings (15) aufweist und in die der Zapfen (36) positionierbar ist.

## Claims

1. Steering arrangement (1), comprising a steering gear shaft (2) and a steering coupling (4), which is provided with a fork end (3) and supports a connecting element (9), by means of which an end (10) of the steering gear shaft (2) is connected to the steering coupling (4) in the form of a plug-and-socket connection,
**characterised in that**
the steering gear shaft end (10) and the connecting element (9) are designed as coaxial plug-and-socket partners at facing ends by means of at least one tongue-and-groove guide element pair (37, 38, 39, 40), which provides a torque-transmitting positive guidance,
**in that** the connecting element (9) forms a hollow shaft (6) of the steering coupling (4), the at least one groove (37, 39) and/or the at least one tongue (38, 40) of the guide element pair being formed on the inside (56) of the shaft (6),
and **in that** the steering arrangement (1) comprises a clamping device (11), by means of which the plug-and-socket partners can be clamped to one another in a plugging position in a way that secures them against automatic release.

2. Steering arrangement according to claim 1,
**characterised in that**
the steering gear shaft end (10) and the connecting element (9) comprise several tongue-and-groove guide element pairs (37, 38, 39, 40), which are offset circumferentially and have different widths and/or are distributed asymmetrically along the circumference of the steering gear shaft end (10) and the connecting element (9).

3. Steering arrangement according to claim 1 or 2,
**characterised in that**
the shaft (6) of the steering coupling (4) supports the clamping device (11), which comprises a latching sleeve (12), a compression spring (14) and a backing ring (15),
- wherein the backing ring (15) is rigidly joined to the shaft (6) and the compression spring (14) bears against the side (16) of the backing ring (15) which is remote in the plugging direction of the steering gear shaft (2),
- wherein the latching sleeve (12) engages the backing ring (15) and the compression spring (14) from behind and is mounted on the shaft (6) while being capable of rotary and traversing movement,
- wherein the latching sleeve (12) has at the end (31) remote from the compression spring (14) at least one radially inward-oriented projection (34) or a groove, which corresponds in its width to the groove (39) or to the tongue of the steering gear shaft end (10) respectively,
- wherein an undercut (44), which is adjoined by the at least one groove (39) and/or the at least one tongue (40) of the steering gear shaft end (10), is formed on the steering gear shaft end (10).

4. Steering arrangement according to claim 3,
**characterised in that**
the latching sleeve (12) has an inward-projecting annular collar (32), which covers and encompasses the backing ring (15) on the side (33) remote from the compression spring (14) and from which the at least one projection (34) projects radially inwards from the annular collar (32), **in that** at least one through-opening (35) is formed in the annular collar (32),
and **in that** the backing ring (15) has at the end face (33) remote from the compression spring (14) at least one pin (36), which is located in the covered region and corresponds to the through-opening (35).

5. Steering arrangement according to claim 3 or 4,
**characterised in that**
the clamping device (11) includes a control ring (19), which bears against the compression spring (14) opposite the backing ring (15) and which has at the end face remote from the backing ring (15) a preferably ramp-like control contour (23), against which the latching sleeve (12) bears with a control cam (24),
and **in that** the shaft (6) has on its outside at least one axially oriented guide groove (22), with which the control ring (19) engages with a guide pin (21) formed on its inner circumference.

6. Steering arrangement according to any of claims 3 to 5, **characterised in that**
the steering arrangement (1) includes at several circumferentially offset tongue-and-groove guide element pairs (37, 38, 39, 40) an allocation device (45) comprising the following parts:
- differently shaped contour elements (46, 47, 48), which are formed on the latching sleeve (12) at the end (31) remote from the fork end (3) and which extend radially inwards,
- an orientation pin (49), which is located coaxially in front of the steering gear shaft end (10) and which comprises contour elements (50, 51, 52), which project radially outwards and have a negative shape relative to the contour elements (46, 47, 48) of the latching sleeve (12), the diameter of the pin (49) with its contour elements (50, 51, 52) being smaller than the diameter of the inside width of the shaft (6),
- contour elements (42) formed in the tongues (40) of the steering gear shaft end (10), having the same shape and the same cross-section as the contour elements (50, 51, 52) of the pin (49) and being arranged in alignment thereto.

7. Steering arrangement according to any of claims 1 to 6,
**characterised in that**
the steering arrangement (1) comprises a plug which tightly seals the end (10) of the hollow steering gear shaft (2).

8. Steering arrangement according to any of claims 1 to 7,
**characterised in that**
the groove (37, 39) and the tongue (38, 40) of the at least one tongue-and-groove guide element pair have a wedge shape, the groove (37, 39) tapering in the longitudinal axial direction towards the side remote from the plug-and-socket partner and the tongue (38, 40) tapering in the longitudinal axial direction towards the side facing the plug-and-socket partner.

9. Steering arrangement according to any of claims 3 to 8,
**characterised in that**
the latching sleeve (12) comprises at least one resilient location clip, which projects at an angle from the inner circumference of the sleeve (12) and stands in the locked state on the end face (16) of the backing ring (15) on which the compression spring (14) is supported.

10. Steering arrangement according to any of claims 4 to 9,
**characterised in that**
at least one shallow trough (55), which has the contour of a pin (36) of the backing ring (15) and in which the pin (36) can be positioned, is formed on the inside (54) of the annular collar (32).

## Revendications

1. Système de direction (1) comprenant un arbre de direction (2) et un embrayage de direction (4) doté d'une fourchette (3), ledit accouplement de direction (4) supporte un élément de liaison (9) qui permet de relier une extrémité (10) de l'arbre de direction (2) à l'accouplement de direction (4) sous forme d'un raccord enfichable, **caractérisé en ce que** l'extrémité (10) d'arbre de direction et l'élément de liaison (9) sont conçus comme des éléments enfichables coaxiaux aux extrémités se faisant face au moyen d'au moins une paire d'élément de guidage (37,38, 39, 40) à rainure et languette, qui établit un guidage forcé transmettant le couple, **en ce que** l'élément de liaison (9) forme un arbre creux (6) de l'accouplement de direction (4), l'au moins une rainure (37, 39) et/ou l'au moins une languette (38, 40) de la paire d'éléments de guidage étant moulée sur la face intérieure (56) de l'arbre, et **en ce que** le système de direction (1) comprend un dispositif de serrage (11) qui permet de serrer les éléments enfichables l'un contre l'autre dans une position enfichable de manière à ce qu'ils ne puissent pas se détacher.

2. Système de direction selon la revendication 1, **caractérisé en ce que** l'extrémité (10) d'arbre de direction et l'élément de liaison (9) présentent plusieurs paires d'élément de guidage (37, 38, 39,40) à rainure et languette disposés en quinconce sur la circonférence, qui présentent une largeur différente et/ou qui sont répartis de manière asymétrique sur la circonférence de l'extrémité (10) d'arbre de direction et de l'élément de liaison (9).

3. Système de direction selon l'une quelconque des revendications 1 à 2, **caractérisé en ce que** l'arbre (6) de l'accouplement de direction (4) supporte le dispositif de serrage (11) qui comprend une douille d'encliquetage (12), un ressort de pression (14) et une bague d'appui (15).
- la bague d'appui (15) étant reliée à demeure à l'arbre (6) et le ressort de pression (14) étant posé sur la face de la bague d'appui (15) en regard de l'arbre de direction (2) dans la direction d'enfichage,
- la douille d'encliquetage (12) s'insérant par l'arrière dans la bague d'appui (15) et le ressort de pression (14) et étant montée en rotation et coulissant sur l'arbre (6),
- la douille d'encliquetage (12) présentant sur l'extrémité (31) faisant face au ressort de pression (14) au moins une partie en saillie (34) orientée radialement vers l'intérieur ou une rainure, qui correspond dans la largueur à la rainure (39) ou à la languette de l'extrémité (10) d'arbre de direction,
- sur l'extrémité (10) d'arbre de direction étant formée une contre-dépouille (44) à laquelle se rattache l'au moins une rainure (39) et/ou l'au moins une languette (40) de l'extrémité (10) d'arbre de direction.

4. Système de direction selon la revendication 3, **caractérisé en ce que** la douille d'encliquetage (12) présente un épaulement annulaire (32) côté extrémité dépassant vers l'intérieur, qui entoure par recouvrement la bague d'appui (15) sur le ressort de pression (14) du côté (33) en regard et qui s'éloigne radialement vers l'intérieur de l'au moins une partie en saillie (34), **en ce que** est formée dans l'épaulement annulaire (32) au moins une ouverture (35) de passage et **en ce que** la bague d'appui présente sur sa face avant faisant face au ressort de pression (14) au moins un tenon (36) qui est disposé dans la zone recouverte et qui correspond à l'ouverture (35) de passage.

5. Système de direction selon l'une quelconque des revendications 3 ou 4, **caractérisé en ce que** le dispositif de serrage (11) comprend une bague de commande (19) qui est disposé sur le ressort de pression (15) en regard de la bague d'appui (15) et qui présente sur la face avant en regard de la bague d'appui (15) au moins un contour de commande (23) de préférence en forme de rampe, sur lequel est disposée la douille d'encliquetage (12) à l'aide d'une came de commande (24) et **en ce que** l'arbre (6) présente côté extérieur au moins une rainure de guidage (22) s'étendant axialement, dans laquelle la bague de commande (19) s'insère à l'aide d'un tenon de guidage (21) conçu sur sa circonférence intérieure.

6. Système de direction selon l'une quelconque des revendications de 3 à 5, **caractérisé en ce que** le système de direction (1) comprend un dispositif d'affectation (45) pour les différentes paires d'éléments de guidage (37, 38, 39, 40) à rainure et languette disposés en quinconce sur la circonférence, ledit dispositif d'affectation comprenant les éléments suivants :
- des éléments de contours (46, 47, 48) de forme différente qui sont disposés sur la douille d'encliquetage (12) sur l'extrémité (31) en regard de la fourchette (3) et qui dépassent axialement vers l'intérieur,
- un tenon d'orientation (49) qui est préinstallé coaxialement sur l'extrémité (10) d'arbre de direction et qui présente des éléments de contour de forme négative (50, 51, 52) dépassant radialement vers l'extérieur par rapport aux éléments de contour (46, 47, 48) de la douille d'encliquetage (12), le diamètre du tenon (49) avec ses éléments de contours (50, 51, 52) étant inférieur au diamètre intérieur de l'arbre (6),
- des éléments de contour (42), qui sont formés dans les languettes (40) de l'extrémité (10) d'arbre de direction, lesdits éléments ayant la même forme et la même taille en section transversale que les éléments de contour (50, 51, 52) du tenon (49) et étant alignés par rapport à ces derniers.

7. Système de direction selon l'une quelconque des revendications de 1 à 6, **caractérisé en ce que** le système de direction (1) présente un tenon qui ferme hermétiquement l'extrémité (10) de l'arbre de direction (2) creux.

8. Système de direction selon l'une quelconque des revendications de 1 à 7, **caractérisé en ce que** la rainure (37, 39) et les languettes (38, 40) de l'au moins une paire d'éléments de guidage (37,39, 38,40) à rainure et languette sont cunéiformes, la rainure (37, 39) s'amincissant dans la direction axiale longitudinale en direction du côté en regard de l'élément d'enfichage, et les languettes (6) s'amincissant dans la direction axiale longitudinale en direction du côté orienté vers l'élément enfichable.

9. Système de direction selon l'une quelconque des revendications de 3 à 8, **caractérisé en ce que** la douille d'encliquetage (12) présente au moins un collier de serrage élastique qui dépasse obliquement de la circonférence intérieure de la douille (12) et est disposée sur la face avant (16) de la bague d'appui (15), sur laquelle s'appuie le ressort de pression (14), dans un état verrouillé.

10. Système de direction selon l'une quelconque des revendications de 4 à 9, **caractérisé en ce que** sur le côté intérieur (54) de l'épaulement annulaire (32) est formée au moins une cuvette (55) plate qui présente le contour d'un tenon (36) de la bague d'appui (15) et dans lequel le tenon (36) peut se positionner.
